# EUROPÄISCHE PATENTSCHRIFT

(11) **EP 2 637 915 B1**
(45) Veröffentlichungstag und Bekanntmachung des Hinweises auf die Patenterteilung: **08.01.2014**
(21) Anmeldenummer: 11781790.8
(22) Anmeldetag: 09.11.2011
(51) Int. Cl.: B62D 35/02, B62D 37/02, F02D 41/02

(54) **VERFAHREN ZUR ABTRIEBSGENERIERUNG VON DURCH BRENNKRAFTMASCHINEN BETRIEBENEN FAHRZEUGEN**
METHOD FOR GENERATING DOWN FORCE BY VEHICLES OPERATED BY INTERNAL COMBUSTION ENGINES
PROCÉDÉ DE GÉNÉRATION DE FORCE DESCENSIONNELLE PAR DES VÉHICULES PROPULSÉS PAR DES MOTEURS À COMBUSTION INTERNE

(30) Priorität: 11.11.2010 AT 18562010
(43) Veröffentlichungstag der Anmeldung: 18.09.2013
(73) Patentinhaber: AVL List GmbH, 8020 Graz (AT)
(72) Erfinder: SCHOEGGL, Peter, A-8151 Hitzendorf (AT)
(74) Vertreter: Babeluk, Michael
(86) Internationale Anmeldenummer: PCT/EP2011/069699
(87) Internationale Veröffentlichungsnummer: WO 2012/062785

(56) Entgegenhaltungen:
- WO-A1-98/18668
- DE-A1- 4 110 750

## Beschreibung

Die Erfindung betrifft ein Verfahren zur Abtriebsgenerierung von durch Brennkraftmaschinen betriebenen Fahrzeugen, insbesondere Rennfahrzeugen oder Sportfahrzeugen, mit einem Mittel zur Abtriebsgenerierung durch Abgaszufuhr aus der Brennkraftmaschine in zumindest einen der Abtriebserhöhung dienenden Bereich der Karosserie.

Ein Verfahren und eine Vorrichtung zur Erzeugung von Antrieb am Unterboden von Renn- und Sportfahrzeugen ist aus der gattungsgemäßen DE 41 10 750 A1 bekannt.

Bei Renn- und Sportfahrzeuge werden Beschleunigungen, Verzögerungen und Kurvenbeschleunigungen erzielt, die den Wert von 1 g (= Erdbeschleunigung) erheblich überschreiten. Solche Werte sind nur möglich, wenn die Haftungsgrenzen zwischen den Reifen und der Fahrbahnoberfläche mit aerodynamischen Hilfsmitteln heraufgesetzt werden. Am Fahrzeugkörper wird starker Abtrieb erzeugt. Diesem Zweck dienen Frontflügel, Heckflügel und eine besondere Formgebung des eigentlichen Fahrzeugkörpers. Eine dominierende Rolle spielt dabei die Gestaltung des Fahrzeugunterbodens. Es wird angestrebt, die unter dem Fahrzeugboden strömende Luft so stark wie nur möglich zu beschleunigen. Je höher deren Geschwindigkeit, desto stärker ist nach dem Bernoullischen Gesetz deren Saugkraft und desto stärker ist der auf den Fahrzeugunterboden ausgeübte Abtrieb. Um eine möglichst starke Beschleunigung der Unterbodenluft zu erreichen, wird bei heutigen Rennfahrzeugen die kinetische Energie der Abgase herangezogen: Der Unterboden wird am Heck des Fahrzeugs nach oben gebogen und meist mit senkrechten aerodynamischen Luftleitblechen zur Seite hin abgeschirmt und eventuell noch in der Mitte unterteilt. Auf diese Weise entsteht für die Luft, die unter dem Fahrzeug entlang strömt, ein Diffusor. In diese Diffusorzone werden die Enden der Auspuffrohre mit waagrechten nach hinten zielender Strahlrichtung eingeleitet. Die mit hoher Geschwindigkeit austretenden Abgase üben auf die Luft unter dem Unterboden eine Saugwirkung aus. Sie erhöhen deren Geschwindigkeit und damit deren Saugwirkung auf den Unterboden und somit den Abtrieb des Fahrzeugs.

Nachteilig ist, dass der durch die Abgasströmung induzierte Abtrieb stark von der Motordrehzahl abhängig ist. Eine Reduzierung der Drehzahl in Kurven wirkt sich somit nachteilig auf die entstehende abgasinduzierte Abtriebskraft aus.

Aufgabe der Erfindung ist es, diese Nachteile zu vermeiden und die Abtriebskraft insbesondere in mit niedriger Drehzahl durchfahrenen Bereichen der Streckenführung zu erhöhen.

Erfindungsgemäß wird dies dadurch erreicht, dass - vorzugsweise abhängig von der Streckenführung - die Luftzahl λ der Brennkraftmaschine verändert wird, wobei in Abschnitten mit erhöhtem Bedarf an Abtriebskraft die Brennkraftmaschine mager, vorzugsweise mit einer Luftzahl λ von mindestens 1,2 - besonders vorzugsweise mit mindestens 1,3 - betrieben wird.

Die normalerweise stöchiometrisch oder fett betriebene Brennkraftmaschine eines Rennfahrzeuges, zum Beispiel eines Formel 1 - Rennautos, wird somit in Bereichen, in welchen eine erhöhte Abtriebskraft des Fahrzeuges erforderlich ist, stark abgemagert, wobei vorzugsweise die Abmagerung durch Erhöhen des Luftdurchsatzes erfolgt. Der erhöhte Luftdurchsatz bewirkt eine Erhöhung der emittierten Abgasmenge und somit der Strömungsgeschwindigkeit zwischen dem Unterboden und der Straße, was weiters eine deutliche Steigerung der Abtriebskraft ermöglicht.

Die Luftzahl λ kann dabei über ein Bedienelement zum Beispiel am Lenkrad direkt verändert werden. Es ist aber auch möglich, dass die Luftzahl indirekt durch den Fahrer, zum Beispiel in Abhängigkeit des gewählten Ganges und/oder der Drehzahl der Brennkraftmaschine und/oder zumindest einer Fahr- oder Bremspedalstellung verändert wird.

Die Erhöhung der Luftzahl λ kann dabei zeitlich auf eine definierte Dauer begrenzt sein, wobei die Zeitdauer auf einen fixen oder vom Fahrer frei wählbaren Wert eingestellt werden kann. Alternativ oder zusätzlich ist es auch möglich, dass der Magerbetrieb am Kurvenausgang automatisch beendet wird, also zum Beispiel, wenn die einwirkenden Querkräfte oder ein Lenkungseinschlag einen Grenzwert unterschreiten.

Um für jede Position des Fahrzeuges eine genügend hohe Abtriebskraft sicher zu stellen, kann weiters vorgesehen sein, dass die aktuelle Abtriebskraft über Sensoren am Fahrzeug überwacht wird und die Luftzahl erhöht wird, wenn die aktuelle Abtriebskraft einen Sollwert für die Abtriebskraft unterschreitet.

Im Rahmen der vorliegenden Erfindung ist weiters vorgesehen, dass die Straßenführung samt Bereichen mit erhöhtem Bedarf an Abtriebskraft in einer elektronischen Datenbank abgelegt wird, wobei vorzugsweise das Fahrzeug eine Positionsbestimmungseinrichtung aufweist, mit welcher die aktuelle Position des Fahrzeuges in der elektronisch abgespeicherten Streckenführung ermittelt wird. Auf diese Weise ist es möglich, für jede aktuelle Position des Rennfahrzeuges auf der Rennstrecke Bereiche mit erhöhtem Bedarf an Abtriebskraft anzugeben.

Dabei kann weiters vorgesehen sein, dass für jeden Punkt der elektronisch abgespeicherten Streckenführung ein Sollwert für die Abtriebskraft und die Vortriebskraft ermittelt und eingespeichert wird, wobei vorzugsweise auf Grund der Sollwerte für die Abtriebskraft und die Vortriebskraft für jeden Punkt der Straßenführung ein Sollwert für die Luftzahl ermittelt und eingespeichert wird.

In Weiterführung der Erfindung kann vorgesehen sein, dass die aktuelle Luftzahl der Brennkraftmaschine in jedem Punkt der Straßenführung dem abgespeichertem Sollwert der Luftzahl nachgeführt wird. Somit kann - ohne manuellem Zutun des Fahrers - automatisch für jede aktuelle Position des Fahrzeuges der bestmögliche Abtrieb für das Fahrzeug generiert werden.

Die Erfindung wird im folgenden anhand der Figuren näher erläutert. Es zeigen:

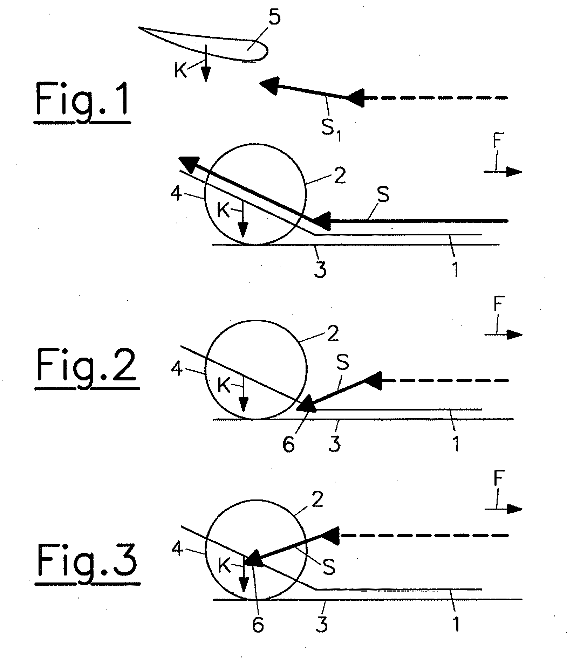

- Fig. 1 bis Fig. 3: verschiedene Einrichtungen zur Erhöhung der Abtriebskraft bei einem Fahrzeug zur Durchführung des erfindungsgemäßen Verfahrens.

Die Fig. 1 bis Fig. 3 zeigen schematisch jeweils den Unterboden 1 eines Rennfahrzeuges, sowie ein Hinterrad 2. Wie ersichtlich, ist der Unterboden im Bereich des Hinterrades 2 - entgegen der Fahrtrichtung F betrachtet - ansteigend ausgeführt und bildet mit dem Untergrund 3 einen Diffusor 4. Mit den Pfeilen S sind jeweils Abgasströmungen angedeutet, welche zur Erhöhung der Abtriebskraft K an verschiedenen Stellen einer Abtriebsgeneriereinrichtung eingebracht werden. Der Diffusor 4 bildet dabei eine Abtriebsgeneriereinrichtung aus. Eine weitere Abtriebsgeneriereinrichtung wird durch einen Heckflügel 5 gebildet. Wie in Fig. 1 ersichtlich ist, wird zur Erhöhung des Abtriebes das Abgas gemäß dem Pfeil S₁ an der Unterseite des Heckflügels 5 zugeführt. Weiters kann Abgas an der Oberseite des Unterbodens 1 zugeführt werden.

In Fig. 2 weist der Unterboden 1 im Übergang zum Diffusor 4 eine Ausströmöffnung 6 auf, durch welche Abgas in den Anfangsbereich des Diffusors 4 eingebracht wird.

Fig. 3 zeit eine Variante, in welchem die Ausströmöffnung 6 innerhalb des Diffusors 4 angeordnet ist. Das Abgas wird somit direkt in den Diffusor 4 eingebracht.

In sämtlichen gezeigten Ausführungen ist die auf die Hinterräder 2 wirkende Abtriebskraft K abhängig von der Geschwindigkeit der Abgasströmung S, S₁.

Das vorgeschlagenen Verfahren sieht vor, dass die Brennkraftmaschine des Rennfahrzeuges in Bereichen, in welchen erhöhte Abtriebskräfte erforderlich sind, stark abgemagert, beispielsweise mit einer Luftzahl von mindestens λ = 1,2 betrieben wird, wobei sich der Luftdurchsatz durch die Brennkraftmaschine erhöht. Dieser gesteigerte Luftdurchsatz führt zu erhöhten Abgasmengen und Abgasgeschwindigkeiten, was sich erhöhend auf die erzielbaren Abtriebskräfte K auswirkt.

Die Luftzahl kann dabei direkt durch den Fahrer, beispielsweise durch Betätigen eines Knopfes oder Reglers am Lenkrad, kurzfristig erhöht werden. Die Dauer der Erhöhung kann dabei an einen Zeitzähler gebunden sein. Weiters ist es denkbar, die Dauer der Erhöhung der Luftzahl λ mit den Werten eines Beschleunigungs-sensors zu verknüpfen oder an den Lenkungseinschlag zu koppeln, so dass beispielsweise am Kurvenausgang die Luftzahl auf den ursprünglichen Wert gesenkt werden kann. Weiters ist es auch möglich, die Luftzahl in Abhängigkeit von der Gangwahl und/oder der Drehzahl und/oder einer Fahrpedal- und/oder Bremspedalstellung indirekt durch den Fahrer zu verändern, so dass beim Zurückschalten die Luftzahl automatisch - für eine gewisse Dauer - erhöht wird.

Besonders vorteilhaft ist es, wenn Bereiche der Streckenführung, in welchen erhöhte Abtriebskräfte gefordert werden, in einer elektronischen Datenbank abgespeichert werden. Das Fahrzeug weist dabei eine Positioniererkennungseinrichtung auf, mit welcher die aktuelle Position des Fahrzeuges auf der Strecke bestimmt wird. Erreicht das Fahrzeug einen Bereich der Streckenführung, in welchem erhöhte Abtriebskräfte K erforderlich sind, so wird die Brennkraftmaschine automatisch mager betrieben, wodurch sehr rasch zusätzliche Abtriebskräfte K aufgebaut werden können. Diese zusätzlichen Abtriebskräfte K können einen Abtriebsverlust durch kurvenbedingte Drehzahlabnahmen der Brennkraftmaschine zumindest teilweise kompensieren, wodurch wiederum höhere Kurvengeschwindigkeiten möglich werden.

## Patentansprüche

1. Verfahren zur Abtriebsgenerierung von durch Brennkraftmaschinen betriebenen Fahrzeugen, insbesondere Rennfahrzeugen oder Sportfahrzeugen, mit einem Mittel zur Abtriebsgenerierung durch Abgaszufuhr aus der Brennkraftmaschine in zumindest einen der Abtriebserhöhung dienenden Bereich der Karosserie, **dadurch gekennzeichnet, dass** - vorzugsweise abhängig von der Streckenführung - die Luftzahl λ der Brennkraftmaschine verändert wird, wobei in Abschnitten der Streckenführung mit erhöhtem Bedarf an Abtriebskraft (K) die Brennkraftmaschine mager, vorzugsweise mit einer Luftzahl λ von mindestens 1,2 - besonders vorzugsweise mit mindestens etwa 1,3 -betrieben wird.

2. Verfahren nach Anspruch 1, **dadurch gekennzeichnet, dass** die Luftzahl direkt oder indirekt manuell durch den Fahrer erhöht wird.

3. Verfahren nach Anspruch 1 oder 2, **dadurch gekennzeichnet, dass** die Luftzahl in Abhängigkeit des gewählten Ganges und/oder der Drehzahl der Brennkraftmaschine verändert wird.

4. Verfahren nach einem der Ansprüche 1 bis 3, **dadurch gekennzeichnet, dass** die Luftzahl λ für eine definierte Zeitdauer erhöht wird.

5. Verfahren nach einem der Ansprüche 1 bis 4, **dadurch gekennzeichnet, dass** der Magerbetrieb beendet wird, wenn gemessene Querkräfte und/oder ein ermittelter Lenkungseinschlag einen definierten Grenzwert unterschreitet.

6. Verfahren nach einem der Ansprüche 1 bis 5, **dadurch gekennzeichnet, dass** die aktuelle Abtriebskraft (K) über Sensoren am Fahrzeug überwacht wird und die Luftzahl erhöht wird, wenn die aktuelle Abtriebskraft (K) einen Sollwert für die Abtriebskraft unterschreitet.

7. Verfahren nach einem der Ansprüche 1 bis 6, **dadurch gekennzeichnet, dass** die Straßenführung samt Bereichen mit erhöhtem Bedarf an Abtriebskraft in einer elektronischen Datenbank abgelegt werden.

8. Verfahren nach Anspruch 7, **dadurch gekennzeichnet, dass** das Fahrzeug eine Positionsbestimmungseinrichtung aufweist, mit welcher die aktuelle Position des Fahrzeuges in der elektronisch abgespeicherten Streckenführung ermittelt wird.

9. Verfahren nach Anspruch 7 oder 8, **dadurch gekennzeichnet, dass** für jeden Punkt der elektronisch abgespeicherten Streckenführung ein Sollwert für die Abtriebskraft (K) und die Vortriebskraft ermittelt und eingespeichert wird.

10. Verfahren nach Anspruch 9, **dadurch gekennzeichnet, dass** auf Grund der Sollwerte für die Abtriebskraft (K) und die Vortriebskraft für jeden Punkt der Steckenführung ein Sollwert für die Luftzahl ermittelt und eingespeichert wird.

11. Verfahren nach Anspruch 9 oder 10, **dadurch gekennzeichnet, dass** die aktuelle Luftzahl der Brennkraftmaschine in jedem Punkt der Streckenführung dem abgespeichertem Sollwert der Luftzahl nachgeführt wird.

## Claims

1. Method for generating downforce in vehicles powered by internal combustion engines, especially racing vehicles and sports vehicles, with a means for generating downforce which is based on feeding exhaust gas from the internal combustion engine into at least one area of the vehicle body suitable for increasing downforce, **characterised in that,** preferably depending on the course layout, the air ratio λ of the internal combustion engine is varied, such that in sections of the course which require increased downforce (K) the internal combustion engine is operated in the lean mode, preferably with an air ratio λ of at least 1.2, and particularly preferred at least 1.3.

2. Method according to claim 1, **characterised in that** the air ratio is manually increased by the driver, either directly or indirectly.

3. Method according to claim 1 or 2, **characterised in that** the air ratio is varied depending on the gear chosen and/or the rpm of the internal combustion engine.

4. Method according to any of claims 1 to 3, **characterised in that** the air ratio λ is increased for a defined length of time.

5. Method according to any of claims 1 to 4, **characterised in that** the lean operational mode is ended when measured lateral forces and/or a determined steering angle drop below a defined limiting value.

6. Method according to any of claims 1 to 5, **characterised in that** the current downforce (K) is monitored by sensors in the vehicle and that the air ratio is increased if the current downforce (K) drops below a downforce target value.

7. Method according to any of claims 1 to 6, **characterised in that** the course layout including areas where increased downforce is required, is stored in an electronic database.

8. Method according to claim 7, **characterised in that** the vehicle is furnished with a position detection device by means of which the current position of the vehicle is determined in relation to the stored course layout.

9. Method according to claim 7 or 8, **characterised in that** for each point of the electronically stored course layout a target value for the downforce (K) and the propulsion force is determined and stored.

10. Method according to claim 9, **characterised in that** for each point of the course layout a target value for the air ratio is determined and stored, which is based on the target values for downforce (K) and propulsion force for each point.

11. Method according to claims 9 or 10, **characterised in that** for each point of the electronically stored course layout the current air ratio of the internal combustion engine is adjusted to match the stored air ratio target value.

## Revendications

1. Procédé permettant à des véhicules, en particulier des véhicules de course ou des véhicules de sport entrainés par des moteurs à combustion interne de générer une force de portance négative comportant des moyens permettant de générer une force de portance négative par approvisionnement en gaz d'échappement du moteur dans au moins une zone de la carrosserie servant à augmenter la force de portance négative,
**caractérisé en ce que** de préférence en fonction de l'itinéraire, on modifie l'indice λ du moteur, dans des sections de l'itinéraire ayant une exigence augmentée en force de portance négative (K), le moteur étant actionné selon un régime maigre, de préférence avec un indice λ d'au moins 1,2, de façon particulièrement préférentielle d'au moins 1,3.

2. Procédé conforme à la revendication 1,
**caractérisé en ce que**
l'indice λ est augmenté manuellement directement ou indirectement par le conducteur.

3. Procédé conforme à la revendication 1 ou 2,
**caractérisé en ce que**
l'indice λ est modifié en fonction du rapport de vitesse et/ou de la vitesse de rotation du moteur choisi.

4. Procédé conforme à l'une des revendications 1 à 3,
**caractérisé en ce que**
l'indice λ est augmenté pendant une durée définie.

5. Procédé conforme à l'une des revendications 1 à 4,
**caractérisé en ce que**
le fonctionnement en régime maigre est achevé lorsque les forces transversales mesurées et/ou action de braquage détectée dépasse(nt) vers le bas une valeur limite définie.

6. Procédé conforme à l'une des revendications 1 à 5,
**caractérisé en ce que**
la force de portance négative actuelle (K) est surveillée par des capteurs montés sur le véhicule et l'indice λ est augmenté lorsque cette force de portance négative actuelle (K) dépasse vers le bas une valeur de consigne de la force de portance négative.

7. Procédé conforme à l'une des revendications 1 à 6,
**caractérisé en ce que**
l'itinéraire y compris des zones ayant une demande augmentée en force de portance négative est déposé dans une banque de données électronique.

8. Procédé conforme à la revendication 7,
**caractérisé en ce que**
le véhicule comporte un dispositif de détermination de position permettant de détecter la position actuelle du véhicule dans l'itinéraire enregistré de manière électronique.

9. Procédé conforme à la revendication 7 ou 8,
**caractérisé en ce que**
pour chaque point de l'itinéraire enregistré de manière électronique une valeur de consigne pour la force de portance négative (K) et la force de propulsion est détectée et est enregistrée.

10. Procédé conforme à la revendication 9,
**caractérisé en ce qu'**
à partir des valeurs de consigne de la force de portance négative (K) et de la force de propulsion est détectée et enregistrée une valeur de consigne de l'indice λ pour chaque point de l'itinéraire.

11. Procédé conforme à la revendication 9 ou 10,
**caractérisé en ce que**
l'indice λ actuel du moteur suit la valeur de consigne de l'indice λ enregistrée pour chaque point de l'itinéraire.
